Europäisches Patentamt

European Patent Office

Office européen des brevets

(11) Veröffentlichungsnummer: **0 238 793 B1**

(12) **EUROPÄISCHE PATENTSCHRIFT**

(45) Veröffentlichungstag der Patentschrift: **07.10.92**

(51) Int. Cl.⁵: **G11B 5/127**, G11B 5/187

(21) Anmeldenummer: **87100692.0**

(22) Anmeldetag: **20.01.87**

(54) **MIG-Magnetkopf.**

(30) Priorität: **25.03.86 DE 3609958**

(43) Veröffentlichungstag der Anmeldung:
**30.09.87 Patentblatt 87/40**

(45) Bekanntmachung des Hinweises auf die
Patenterteilung:
**07.10.92 Patentblatt 92/41**

(84) Benannte Vertragsstaaten:
**DE FR GB IT**

(56) Entgegenhaltungen:
GB-A- 2 009 483

PATENT ABSTRACTS OF JAPAN vol. 8, no.
113 (P-276)(1550) 26 Mai 1984, & JP-A-59
22213

PATENT ABSTRACTS OF JAPAN vol. 10, no.
353 (M-539)(2409) 28 November 1986, & JP-
A-61 151813

PATENT ABSTRACTS OF JAPAN vol. 10, no.
149 (P-461)(2206) 30 Mai 1986, & JP-A-61 3309

PATENT ABSTRACTS OF JAPAN vol. 4, no.
100 (P-19)(582) 18 Juli 1980, & JP-A-55 58824

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Gukkenberger, Horst, Dipl.-Ing. (FH)
i.Fa. Grundig E.M.V. Kurgartenstrasse 37
W-8510 Fürth(DE)**
Erfinder: **Eckstein, Karl-Heinz
i.Fa. Grundig E.M.V. Kurgartenstrasse 37
W-8510 Fürth(DE)**

# Beschreibung

Die vorliegende Erfindung betrifft einen MIG-Magnetkopf mit den im Oberbegriff des Anspruchs 1 angegebenen Merkmalen.

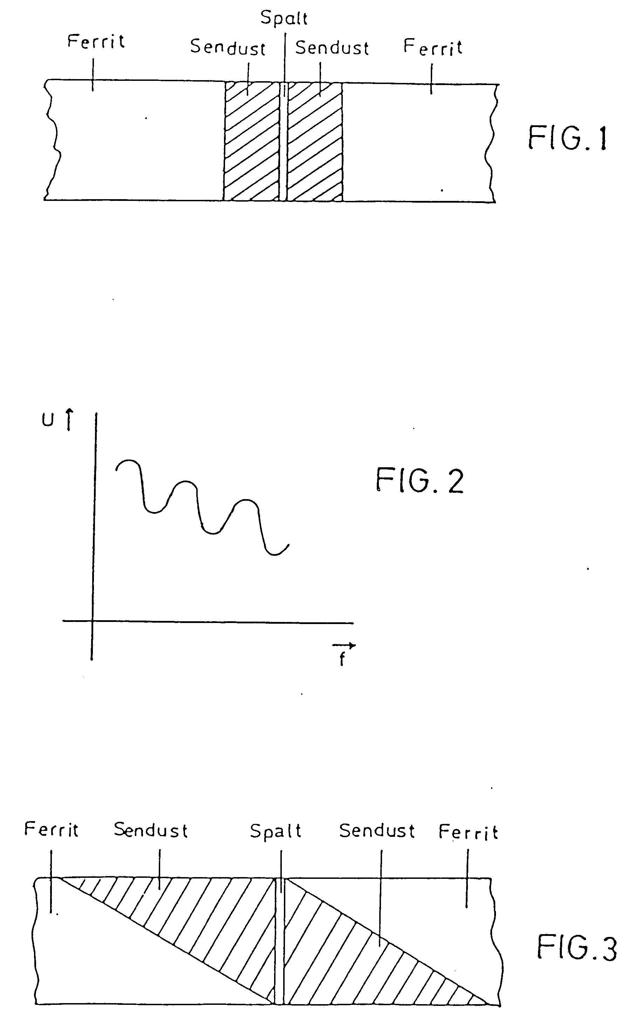

In den letzten Jahren wurden in der magnetischen Videotechnik sogenannte MIG-bzw. "metal-in-gap"-Magnetköpfe entwickelt, welche aufgrund ihrer magnetischen Eigenschaften zur Aufzeichnung von Videosignalen auf hochkoerzitive Bänder, insbesondere Metallpartikel-Bänder (MP-Bänder) oder bedampfte Metallbänder (ME-Bänder), geeignet sind. Den Aufbau eines derartigen MIG-Magnetkopfes zeigt die Fig. 1. Der Spalt des Kopfes ist beidseitig von einem weichmagnetischen Material hoher Sättigungsinduktion und niedriger Magnetostriktion umgeben, vorzugsweise aus einer Sendustlegierung, die den aus weichmagnetischem Material niedrigerer Sättigungsinduktion und höherer Magnetostriktion, vorzugsweise aus weichmagnetischem Ferrit, bestehenden Kernträger vom Spalt trennt.

Aus der Zeitschrift "IEEE Transactions on Magnetics", Sept. 1984, S. 872 - 874, ist es bekannt, daß bei MIG-Magnetköpfen an den Grenzflächen zwischen dem Ferrit und der Sendustlegierung unerwünschte Nebenspalteffekte auftreten, welche auf die unterschiedlichen magnetischen Eigenschaften von Ferrit und Sendustlegierung, insbesondere die unterschiedliche Permeabilität und die unterschiedliche Sättigungsinduktion, zurückzuführen sind. Den grundsätzlichen Verlauf der Wiedergabespannung in Abhängigkeit von der Frequenz, wie er mit einem solchen Kopf erhalten wird, zeigt die Fig. 2. Die aus dieser Figur ersichtlichen unerwünschten Maxima und Minima der Wiedergabespannung sind Folgen des Nebenspalteffektes. Zur Verringerung dieses Nebenspalteffektes werden in dem genannten Artikel die folgenden theoretischen Möglichkeiten vorgeschlagen:

a) Nur auf einer Seite des Spaltes wird eine Sendustlegierung vorgesehen, was theoretisch eine Verringerung der durch den Nebenspalteffekt hervorgerufenen Schwingungen der Wiedergabespannung um 50 % bewirkt;

b) die Breite der Sendustschicht auf beiden Seiten des Spaltes wird unterschiedlich gewählt; damit können jedoch nur Teile der durch den Nebenspalteffekt hervorgerufenen Schwingungen der Wiedergabespannung verringert werden.

c) Ganz allgemein wird in dem genannten Artikel noch in Betracht gezogen, daß durch technologische Fortschritte eine Reduzierung der durch die Nebenspalteffekte hervorgerufenen Störungen möglich sein könnte. Konkrete Vorschläge werden jedoch nicht angegeben.

Ferner wurde bereits vorgeschlagen, die genannten Nebenspalteffekte durch eine geeignete Winkelentkopplung der Nebenspalte gegenüber dem Nutzspalt so zu unterdrücken, daß das Nutzsignal keine sichtbaren Störungen mehr aufweist. Hierzu werden die Sendustschichten schräg zur Spaltebene unter Verwendung der bekannten Sputtertechnik auf das Ferrit aufgebracht. Einen nach dieser Technik aufgebauten Kopf, der auch als TSS-Kopf bezeichnet wird (tilted sendust sputtered ferrite head), zeigt die Fig. 3. Die Fertigung derartiger Köpfe, bei denen die Ursachen der Nebenspalteffekte, d. h. die unterschiedlichen magnetischen Eigenschaften von Ferrit und Sendustlegierung, nach wie vor bestehen, ist jedoch wegen der Winkelentkopplung vergleichsweise aufwendig. Ferner richtet sich bei den TSS-Köpfen die Dicke der aufzusputternden Schicht nach der Spurbreite. Folglich ist es notwendig, vergleichsweise dicke Schichten aufzusputtern, was zeitaufwendig und teuer ist. Auch verschlechtern sich die Eigenschaften eines solchen Kopfes bei höheren Frequenzen (ab ca. 10 MHz) erheblich.

Aus der nicht vorveröffentlichten EP-A-0 222 985 ist ein MIG-Magnetkopf bekannt, bei dem beim Aufsputtern bzw. Aufdampfen der Sendustlegierung auf den Kernträger aus Ferrit die Zusammensetzung der einzelnen Komponenten der Sendustlegierung derart aufeinander abgestimmt wird, daß sich die Permeabilität bzw. die Sättigungsinduktion innerhalb des Bereiches der Sendustlegierung zumindest annähernd kontinuierlich ändert. Bei diesem Magnetkopf treten an den Übergängen zwischen dem Kernträger aus Ferrit und der Sendustlegierung keine sprunghaften Veränderungen von Permeablität bzw. Sättigungsinduktion und damit keine Nebenspalteffekte auf.

Der vorliegenden Erfindung liegt die Aufgabe zugrunde einen Magnetkopf der im Oberbegriff des Anspruchs 1 angegebenen Art derart weiterzuentwickeln, daß Nebenspalteffekte grundsätzlich nicht auftreten, ohne daß es einer Änderung der Zusammensetzung der einzelnen Komponenten des aufgesputterten bzw. aufgedampften zweiten weichmagnetischen Materials bedarf.

Diese Aufgabe wird durch die im kennzeichnenden Teil des Anspruchs 1 angegebenen Merkmale gelöst. Vorteilhafte Ausgestaltungen ergeben sich aus den Unteransprüchen.

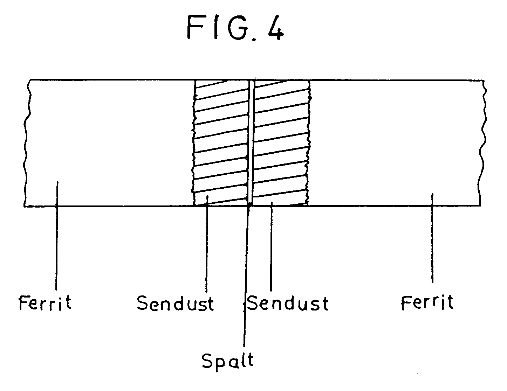

Die Vorteile eines Magnetkopfes mit den beanspruchten Merkmalen bestehen insbesondere darin, daß durch einfache Maßnahmen bei der Fertigung dafür gesorgt werden kann, daß beim fertigen Magnetkopf keinerlei Nebenspalteffekte mehr auftreten. Ferner vergrößert die beanspruchte Aufrauhung die Oberfläche des ersten weichmagnetischen Materials. Damit wird eine bessere Haftung der aufzusputternden Schicht am ersten weichmagnetischen Material erreicht, was eine mechanische Verfestigung des gesamten Kopfes bedeutet. Ferner ist die Dicke der aufzusputternden Schicht nicht mehr von der Spurbreite abhängig. Weitere vorteilhafte Eigenschaften des beanspruchten Magnetkopfes ergeben sich aus einem Ausführungsbeispiel, welches im folgenden anhand von Fig. 4 näher erläutert wird.

Die Fig. 4 zeigt den grundsätzlichen Aufbau eines MIG-Magnetkopfes nach der vorliegenden Erfindung. Der Kopf besteht aus zwei Blockhälften, welche bei der Fertigung getrennt bearbeitet werden. Jede Blockhälfte besteht aus einem Kernträger aus einem ersten weichmagnetischen Material, vorzugsweise aus weichmagnetischem Ferrit. Auf dieses erste weichmagnetische Material wird ein zweites weichmagnetisches Material, vorzugsweise eine Sendustlegierung, aufgesputtert oder aufgedampft. Die Sättigungsinduktion dieser zweiten weichmagnetischen Schicht ist höher und die Magnetostriktion niedriger als die des ersten weichmagnetischen Materials. Schließlich werden die beiden Blockhälften derart miteinander verbunden, daß die Sendustschichten der beiden Blockhälften lediglich durch den ca. 0,15 - 0,35 $\mu$m breiten Spalt, der mit einem nichtmagnetischen Material, vorzugsweise Siliziumoxid, Aluminiumoxid oder Titanoxid gefüllt ist, voneinander getrennt sind.

Vor dem Aufsputtern bzw. Aufdampfen der Sendustlegierung auf das Ferrit wird nach der vorliegenden Erfindung die Oberfläche des Ferrits aufgerauht, so daß die Verbindungsfläche zwischen dem Ferrit und der Sendustschicht keine glatte Oberfläche mehr bildet. Die gewählte Rauhtiefe ist davon abhängig, bei welchen Frequenzen der Kopf verwendet werden soll. Bei Frequenzen bis zu 20 MHz sind im allgemeinen Rauhtiefen von 1 bis 3 $\mu$m notwendig.

Die Aufrauhung der Oberfläche kann durch verschiedene Verfahren erfolgen.

Beispielsweise kann die Oberfläche des Ferrits mit einem entsprechenden Läppmittel geläppt werden. Die Vorteile dieses Verfahrens bestehen darin, die Rauhtiefe durch die Wahl der Korngröße des Läppmittels recht genau kontrollieren zu können.

Ferner kann die Oberfläche des Ferrits mit festgebundenen Schleifscheiben bearbeitet werden. Die Vorteile des Schleifens bestehen in einem sehr schnellen und gezielten Abtrag oder einem gezielten Profilieren der Oberfläche des Ferrits.

Auch kann das Aufrauhen chemisch mittels eines Ätzungsvorganges unter Verwendung einer Säure erfolgen. Die Vorteile des Ätzens bestehen darin, daß in der nicht abgetragenen Oberflächenschicht des Ferrits keinerlei Störungen der Kristallstruktur entstehen.

Ferner ist eine Aufrauhung der Oberfläche des Ferrits auch möglich, indem das Ferrit als Target für einen Sputtervorgang verwendet wird, so daß sich von der Oberfläche des Ferrits Moleküle ablösen. Ein solches Vorgehen könnte mittels des gleichen Werkzeugs erfolgen, mit dem auch das Aufsputtern der Sendust-Legierung auf das Ferrit durchgeführt wird, so daß die beiden Sputtervorgänge lückenlos aufeinanderfolgen können.

Ferner kann die Aufrauhung der Oberfläche des Ferrits auch durch thermisches Ätzen erfolgen. Hierzu wird das Ferrit in einem Ofen so stark erhitzt, daß sich von der Oberfläche des Ferrits Moleküle ablösen. Bei diesem Verfahren wird die Kristallstruktur in der nicht abgetragenen Schicht an der Oberfläche des Ferrits nicht gestört und sogar ein Ausheilen der Oberfläche erreicht.

Auch können zur Aufrauhung der Oberfläche des Ferrits mehrere der oben genannten Verfahren nacheinander angewendet werden.

Bei Magnetköpfen, bei denen die Sendustschicht bis in den (nicht gezeichneten) Rückschlußbereich des Kopfes reicht, ist es wegen der Vergrößerung der Oberfläche und der damit verbundenen besseren Haftung von Vorteil, wenn auch im Rückschlußbereich die Oberfläche des Ferrits vor dem Aufsputtern bzw. Aufdampfen der Sendustlegierung aufgerauht wird.

Bei vielen herkömmlichen Magnetköpfen befinden sich neben dem Spalt zwischen beiden Blockhälften Glaseinlagen zur Stützung des Kopfes (siehe biespielsweise DE-OS 34 47 700, Fig. 2). Diese Glaseinlagen besitzen mit dem Kernträger aus Ferrit eine Verbindungsfläche. Auch diese, der Glaseinlage gegenüberliegende Oberfläche des Ferrits kann in vorteilhafter Weiterbildung der Erfindung aufgerauht sein.

Ferner kann die Sendustschicht durch senkrecht zum Spalt angeordnete, magnetisch und elektrisch isolierende Schichten unterteilt sein. Dies bewirkt eine Verringerung der Wirbelstromverluste und damit ein verbessertes Hochfrequenzverhalten des Magnetkopfes.

Ferner kann zwischen der Sendustlegierung und der neben dem Spalt angeordneten Glaseinlage zusätzlich eine Haftvermittlungsschicht vorgesehen sein.

Ferner kann nach dem Aufsputtern der Sendustlegierung auf die aufgerauhte Oberfläche des Ferrits eine Nachbehandlung der Kernhälften erfolgen. Beispielsweise werden durch ein in einem Magnetfeld durchgeführtes Nachglühen die magnetischen Eigenschaften des fertigen Magnetkopfes verbessert.

Schließlich kann durch eine geeignete Wahl der Orientierung des monokristallinen Ferrits, welches vorzugsweise als Kernträgermaterial in MIG-Magnetköpfen verwendet wird, das Aufrauhen nach einem oder mehreren der oben genannten Verfahren unterstützt werden.

**Patentansprüche**

1. Magnetkopf mit einem Kernträger aus einem ersten weichmagnetischen Material, mit auf das erste weichmagnetische Material aufgesputtertem oder aufgedampftem zweiten weichmagnetischen Material, dessen Sättigungsinduktion größer und dessen Magnetostriktion kleiner ist als die des ersten weichmagnetischen Materials, und mit einem Nutzspalt, **dadurch gekennzeichnet,** daß bedingt durch Maßnahmen bei der Fertigung des Magnetkopfes vor dem Aufsputtern bzw. Aufdampfen des zweiten weichmagnetischen Materials auf das erste weichmagnetische Material die Oberfläche des ersten weichmagnetischen Materials aufgerauht ist, wobei die Rauhtiefe bezüglich der Spaltbreite eine Größe aufweist, die Nebenspalteffekte wirksam vermeidet.

2. Magnetkopf nach Anspruch 1, **dadurch gekennzeichnet,** daß die Aufrauhung durch Läppen erfolgt.

3. Magnetkopf nach Anspruch 1, **dadurch gekennzeichnet,** daß die Aufrauhung durch Schleifen erfolgt.

4. Magnetkopf nach Anspruch 1, **dadurch gekennzeichnet,** daß die Aufrauhung durch Ätzen mit einer Säure erfolgt.

5. Magnetkopf nach Anspruch 1, **dadurch gekennzeichnet,** daß die Aufrauhung durch thermisches Ätzen erfolgt.

6. Magnetkopf nach Anspruch 1, **dadurch gekennzeichnet,** daß das erste weichmagnetische Material als Target für einen Sputter- oder Aufdampfvorgang verwendet wird, so daß sich von der Oberfläche des ersten weichmagnetischen Materials Moleküle ablösen.

7. Magnetkopf nach mehreren der vorhergehenden Ansprüche, **dadurch gekennzeichnet,** daß die Aufrauhung durch Anwendung von mehr als einem der in den Ansprüchen 2 bis 6 genannten Bearbeitungsverfahren erfolgt.

**Claims**

1. Magnetic head having a core support of a first soft-magnetic material, having second soft-magnetic material sputtered or vapour-deposited onto the first soft-magnetic material, the saturation induction of which second material is greater than and the magnetostriction of which is less than that of the first soft-magnetic material, and having a useful gap, characterised in that, due to measures in the production of the magnetic head before sputtering or vapour-depositing the second soft-magnetic material onto the first soft-magnetic material, the surface of the soft-magnetic material is roughened, the peak-to-valley height in relation to the gap width being of a magnitude which effectively avoids secondary-gap effects.

2. Magnetic head according to Claim 1, characterised in that the roughening is performed by lapping.

3. Magnetic head according to Claim 1, characterised in that the roughening is performed by grinding.

4. Magnetic head according to Claim 1, characterised in that the roughening is performed by etching with an acid.

5. Magnetic head according to Claim 1, characterised in that the roughening is performed by thermal etching.

6. Magnetic head according to Claim 1, characterised in that the first soft-magnetic material is used as a target for a sputtering or vapour-depositing operation, so that molecules are detached from the surface of the first soft-magnetic material.

7. Magnetic head according to a plurality of the preceding claims, characterised in that the roughening is performed by using more than one of the working methods mentioned in Claims 2 to 6.

**Revendications**

1. Tête magnétique comportant un porte-noyau réalisé en un premier matériau magnétique doux, un second matériau magnétique doux déposé par pulvérisation ou évaporation sur le premier matériau magnétique doux et dont l'induction de saturation est plus élevée et la magnétostriction plus faible que celle du premier matériau magnétique doux, et une fente utile,
caractérisée en ce qu'en raison de dispositions prises lors de la fabrication de la tête magnétique avant le dépôt par pulvérisation ou évaporation du second matériau magnétique doux sur le premier matériau magnétique doux, la surface du premier matériau magnétique doux est rugueuse, la profondeur de rugosité possédant, par rapport à la largeur de la fente, une valeur évitant efficacement des effets de fentes secondaires.

2. Tête magnétique selon la revendication 1, caractérisée en ce que la rugosité est obtenue par rodage par poudre abrasive.

3. Tête magnétique selon la revendication 1, caractérisée en ce que la rugosité est obtenue par meulage.

4. Tête magnétique selon la revendication 1, caractérisée en ce que la rugosité est obtenue par corrosion à l'aide d'un acide.

5. Tête magnétique selon la revendication 1, caractérisée en ce que la rugosité est obtenue par corrosion thermique.

6. Tête magnétique selon la revendication 1, caractérisée en ce que le premier matériau magnétique doux est utilisé en tant que cible pour une opération de dépôt par pulvérisation ou évaporation, de sorte que des molécules se détachent de la surface du premier matériau magnétique doux.

7. Tête magnétique selon plusieurs des revendications précédentes, caractérisée en ce que la rugosité est obtenue par la mise en oeuvre de plus d'un des procédés de traitement indiqués dans les revendications 2 à 6.

Spalt

Ferrit    Sendust | Sendust    Ferrit

FIG.1

U ↑

FIG. 2

$\overrightarrow{f}$

Ferrit    Sendust    Spalt    Sendust    Ferrit

FIG.3

# FIG. 4

Ferrit      Sendust    Sendust      Ferrit

Spalt